# FASCICULE DE BREVET EUROPEEN

(11) **EP 0 949 103 B1**
(45) Date de publication et mention de la délivrance du brevet: **10.07.2002**
(21) Numéro de dépôt: 99400836.5
(22) Date de dépôt: 06.04.1999
(51) Int. Cl.: B60J 7/20

(54) **Malle arrière pivotante et coulissante pour véhicule découvrable à toit repliable**
Schwenk- und Schiebekofferraumdeckel für Cabriofahrzeug mit Faltverdeck
Pivoting and sliding trunk lid for convertible vehicle with foldable top

(30) Priorité: 09.04.1998 FR 9804477
(43) Date de publication de la demande: 13.10.1999
(73) Titulaire: Société Européenne de Brevets Automobiles, 75011 Paris (FR)
(72) Inventeur: Queveau, Gérard, Le Pin, 79140 Cerizay (FR); Queveau, Paul, Montravers, 79140 Cerizay (FR); Guillez, Jean-Marc, Cirières, 79140 Cerizay (FR)
(74) Mandataire: Keib, Gérard

(56) Documents cités:
- US-A- 5 655 331

## Description

La présente invention concerne une malle arrière pour véhicule découvrable à toit repliable, comprenant des moyens permettant une ouverture de cette malle d'une part pour le passage et le rangement du toit replié dans le coffre arrière et d'autre part pour l'accès à ce coffre pour le rangement de bagages (cf. par exemple US-A-5 655 331, correspondant au préambule de la revendication indépendante).

Habituellement la malle arrière d'un véhicule automobile s'ouvre de l'arrière vers l'avant, ce qui facilite le rangement des bagages.

Pour permettre le passage et le rangement du toit replié d'un véhicule découvrable, il est nécessaire de pouvoir ouvrir le coffre de l'avant vers l'arrière. Cependant, cette solution n'est pas commode pour le rangement des bagages.

Il a ainsi été proposé une malle arrière qui puisse s'ouvrir de l'arrière vers l'avant pour ranger les bagages et qui puisse s'ouvrir de l'avant vers l'arrière pour le passage et le rangement du toit replié du véhicule découvrable.

Cependant, la solution ci-dessus complique la réalisation de la malle arrière.

Le but de la présente invention est de créer une malle arrière de construction simple, n'ayant qu'un seul sens d'ouverture pour assurer les deux fonctions d'une manière optimale, à savoir le passage et le rangement du toit replié et le rangement des bagages.

Suivant l'invention, cette malle arrière est caractérisée en ce que la malle est fixée au châssis à l'aide de moyens permettant simultanément un pivotement de la malle de l'arrière vers l'avant et un coulissement de cette malle de l'avant vers l'arrière.

Le pivotement de la malle vers l'avant permet d'introduire les bagages par l'arrière du coffre, tandis que le coulissement vers l'arrière de la malle dégage à l'avant de celle-ci un espace permettant le passage et le rangement du toit replié.

Selon une version préférée de l'invention, la partie avant de la malle est montée de façon articulée et coulissante le long de deux glissières s'étendant de chaque côté du coffre, au moins l'un des bords latéraux de la malle étant relié de façon articulée à l'une des extrémités d'un tirant dont l'autre extrémité est reliée de façon articulée à une partie du châssis adjacente au fond du coffre.

De préférence, la malle est mobile entre une position fermée dans laquelle l'articulation de cette malle est située à l'avant des glissières et le tirant est incliné en s'étendant vers le haut et vers l'avant en une position ouverte dans laquelle l'articulation de la malle est située à l'arrière des glissières et le tirant s'étend vers le haut, en maintenant la malle dans une position inclinée vers le haut et vers l'arrière.

Selon une version avantageuse de l'invention, à chaque extrémité du bord avant de la malle est fixée une pièce en forme de col de cygne coudée vers l'avant et vers le bas portant à son extrémité opposée à la malle un galet engagé dans la glissière adjacente.

D'autres particularités et avantages de l'invention apparaîtront encore dans la description ci-après.

Aux dessins annexés donnés à titre d'exemples non limitatifs :
- la figure 1 est une vue schématique en coupe longitudinale partielle d'un véhicule découvrable équipé d'une malle arrière selon l'invention ;
- la figure 2 est une vue de détail d'une glissière et de l'articulation de la malle montée dans cette glissière ;
- la figure 3 est une vue suivant la flèche F de la figure 2.

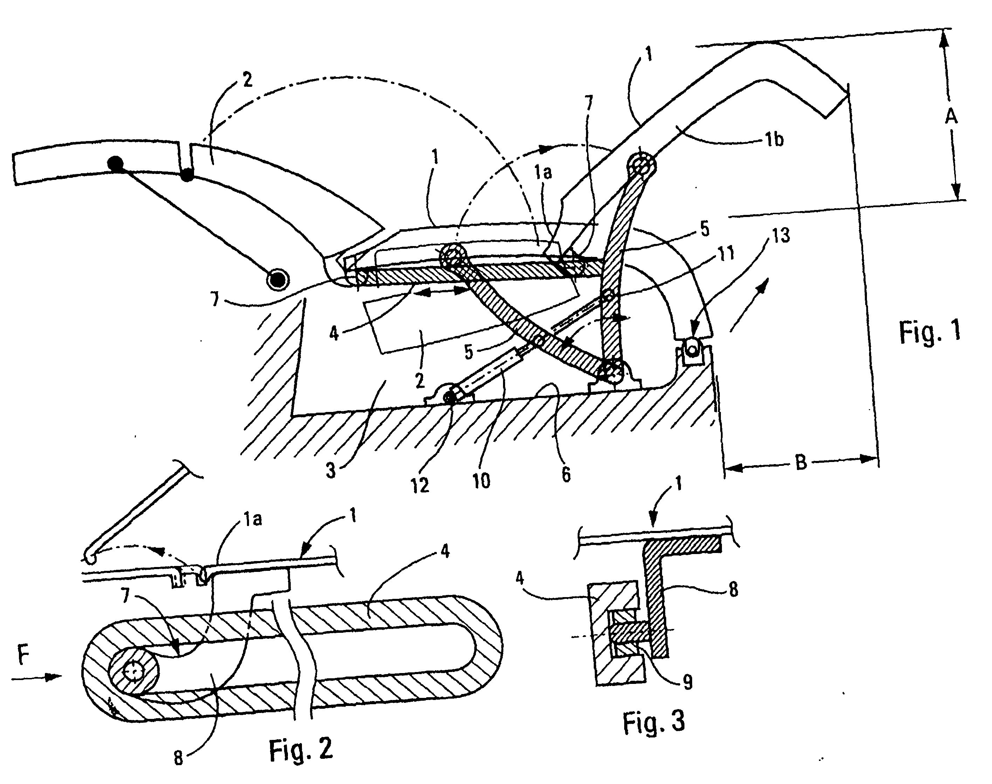

En référence à la figure 1, la malle arrière 1 pour véhicule découvrable à toit repliable 2, comprend des moyens permettant une ouverture de cette malle 1 d'une part pour le passage et le rangement du toit replié 2 dans le coffre arrière 3 et d'autre part pour l'accès à ce coffre pour le rangement de bagages.

Conformément à l'invention, la malle 1 est fixée au châssis à l'aide de moyens permettant simultanément un pivotement de la malle 1 de l'arrière vers l'avant et un coulissement de cette malle 1 de l'avant vers l'arrière.

Comme montré par les figures 1 et 2, la partie avant 1a de la malle 1 est montée de façon articulée et coulissante le long de deux glissières 4 s'étendant de chaque côté du coffre 3. Au moins l'un 1b des bords latéraux de la malle 1 est relié de façon articulée à l'une des extrémités d'un tirant 5 dont l'autre extrémité est reliée de façon articulée à une partie du châssis adjacente au fond 6 du coffre 3.

Comme également montré par la figure 1, la malle 1 est mobile entre une position fermée dans laquelle l'articulation 7 de cette malle est située à l'avant des glissières 4 et le tirant 5 est incliné en s'étendant vers le haut et vers l'avant et une position ouverte dans laquelle l'articulation 7 de la malle 1 est située à l'arrière des glissières 4 et le tirant 5 s'étend vers le haut, en maintenant la malle dans une position inclinée vers le haut et vers l'arrière.

Comme indiqué par les figures 1 et 2, à chaque extrémité du bord avant 1a de la malle 1 est fixée une pièce 8 en forme de col de cygne coudée vers l'avant et vers le bas portant à son extrémité opposée à la malle un galet 9 engagé dans la glissière 4 adjacente.

L'ouverture de la malle 1 est commandée par un vérin électrique 10 ou hydraulique.

Dans l'exemple représenté, ce vérin 10 est fixé de façon articulée en 11 et 12 entre le tirant 5 et une partie du châssis adjacente au fond 6 du coffre 3.

Un système de compensation tel qu'un ressort ou un vérin de compensation peut être prévu pour maintenir la malle 1 en position d'équilibre.

La malle 1 est maintenue fermée par un verrou 13 situé à l'arrière de la malle. Ce verrou 13 peut être commandé manuellement ou électriquement. En cas de commande électrique, un bouton à poussoir situé à l'intérieur du véhicule peut commander simultanément le déverrouillage du verrou 13 et l'actionnement du vérin électrique 10.

Le dispositif que l'on vient de décrire fonctionne de la façon suivante.

Lorsqu'on désire ranger le toit pliable 2 dans le coffre ou simplement ranger des bagages dans le coffre, il suffit de commander le déverrouillage de la malle et l'actionnement du vérin 10.

Ce vérin 10 pousse le tirant 5 de la position inclinée vers la position redressée, représentée sur la figure 1.

Le pivotement du tirant 5 entre les deux positions ci-dessus provoque la rotation de la malle 1 vers le haut et son coulissement vers l'arrière.

En fin de course, la malle 1 déborde vers l'arrière du véhicule d'une distance B et vers le haut d'une distance A.

Dans cette position, la malle 1 dégage à l'avant une ouverture suffisante pour le passage du toit replié 2 et à l'arrière une ouverture suffisante pour le chargement de bagages.

## Revendications

1. Malle arrière pour véhicule découvrable à toit repliable (2), comprenant des moyens permettant une ouverture de cette malle (1) d'une part pour le passage et le rangement du toit replié (2) dans le coffre arrière (3) et d'autre part pour l'accès à ce coffre (3) pour le rangement de bagages, **caractérisée en ce que** la malle (1) est fixée au châssis à l'aide de moyens (5, 8, 9, 10, 13) permettant simultanément un pivotement de la malle (1) de l'arrière vers l'avant et un coulissement de cette malle (1) de l'avant vers l'arrière.

2. Malle arrière conforme à la revendication 1, **caractérisée en ce que** la partie avant (la) de la malle (1) est montée de façon articulée et coulissante le long de deux glissières (4) s'étendant de chaque côté du coffre (3), au moins l'un (1b) des bords latéraux de la malle (1) étant relié de façon articulée à l'une des extrémités d'un tirant (5) dont l'autre extrémité est reliée de façon articulée à une partie du châssis, adjacente au fond (6) du coffre.

3. Malle arrière conforme à la revendication 2, **caractérisée en ce que** la malle (1) est mobile entre une position fermée dans laquelle l'articulation (7) de cette malle est située à l'avant des glissières (4) et le tirant (5) est incliné en s'étendant vers le haut et vers l'avant et une position ouverte dans laquelle l'articulation (7) de la malle est située à l'arrière des glissières (4) et le tirant (5) s'étend, vers le haut, en maintenant la malle (1) dans une position inclinée vers le haut et vers l'arrière.

4. Malle arrière conforme à l'une des revendications 2 ou 3, **caractérisée en ce qu'**à chaque extrémité du bord avant (1a) de la malle (1) est fixée une pièce (8) en forme de col de cygne coudée vers l'avant et vers le bas portant à son extrémité opposée à la malle (1) un galet (9) engagé dans la glissière (4) adjacente.

5. Malle arrière conforme à l'une des revendications 2 à 4, **caractérisée en ce que** l'ouverture de la malle (1) est commandée par un vérin électrique (10) ou hydraulique.

6. Malle arrière conforme à la revendication 5, **caractérisée en ce que** le vérin (10) est fixé de façon articulée entre le tirant (5) et une partie du châssis, adjacente au fond (9) du coffre.

7. Malle arrière conforme à l'une des revendications 1 à 6, **caractérisée en ce qu'**elle est maintenue fermée par un verrou (13) situé à l'arrière de la malle.

## Patentansprüche

1. Hinterkofferraumdeckel für ein Cabrio-Fahrzeug mit zusammenfaltbarem Dach (2) mit Mitteln, welche ein Öffnen dieses Kofferraumdeckels (1) einerseits für den Durchlass und die Anordnung des gefalteten Dachs (2) in dem hinteren Kofferraum (3), und andererseits für den Zugang zu diesem Kofferraum (3) für die Unterbringung von Gepäck ermöglichen, **dadurch gekennzeichnet, dass** der Kofferraumdeckel (1) an dem Chassis mit Hilfe von Mitteln (5, 8, 9, 10, 13) befestigt, die gleichzeitig ein Schwenken des Kofferraumdeckels (1) von hinten nach vorne und ein Gleiten dieses Kofferraumdeckels (1) von vome nach hinten ermöglichen.

2. Hinterkofferraumdeckel gemäß Anspruch 1, **dadurch gekennzeichnet, dass** der vordere Bereich (1a) des Kofferraumdeckels (1) gelenkig und entlang zwei Gleitschienen (4) gleitend angebracht ist, welche sich auf jeder Seite des Kofferraums (3) erstrecken, wobei wenigstens die eine (1b) der Seitenkanten des Kofferraumdeckels (1) gelenkig mit einem der Enden einer Spannstange (5) verbunden ist, deren anderes Ende gelenkig mit einem an den Boden (6) des Kofferraums angrenzenden Bereich des Chassis verbunden ist.

3. Hinterkofferraumdeckel gemäß Anspruch 2, **dadurch gekennzeichnet, dass** der Kofferraumdeckel (1) beweglich angeordnet ist zwischen einer geschlossenen Position, in welcher die Gelenkverbindung (7) dieses Kofferraumdeckels im vorderen Bereich der Gleitschienen (4) angeordnet und die Spannstange (5) geneigt ist, wobei sie sich nach oben und nach vorne erstreckt, und einer geöffneten Position, in welcher die Gelenkverbindung (7) des Kofferraumdeckels (1) im hinteren Bereich der Gleitschienen (4) angeordnet ist und sich die Spannstange (5) nach oben erstreckt, wodurch sie den Kofferraumdeckel (1) in einer nach oben und nach hinten geneigten Position hält.

4. Hinterkofferraumdeckel gemäß einem der Ansprüche 2 oder 3, **dadurch gekennzeichnet, dass** an jedem Ende der Vorderkante (1a) des Kofferraumdeckels (1) ein Teil (8) in Form eines nach vorne und nach unten abgewinkelten C-Gestells befestigt ist, welches an seinem dem Kofferraumdeckel (1) gegenüberliegenden Ende eine in die angrenzende Gleitschiene (4) eingegriffene Reibrolle (9) trägt.

5. Hinterkofferraumdeckel gemäß einem der Ansprüche 2 bis 4, **dadurch gekennzeichnet, dass** das Öffnen des Kofferraumdeckels (1) von einem elektrischen (10) oder hydraulischen Stellantrieb gesteuert wird.

6. Hinterkofferraumdeckel gemäß Anspruch 5, **dadurch gekennzeichnet, dass** der Stellantrieb (10) gelenkig zwischen der Spannstange (5) und einem an den Boden (9) des Kofferraums angrenzenden Bereich des Chassis befestigt ist.

7. Hinterkofferraumdeckel gemäß einem der Ansprüche 1 bis 6, **dadurch gekennzeichnet, dass** er von einem im hinteren Bereich des Kofferraumdeckels angeordneten Riegel (13) geschlossen gehalten wird.

## Claims

1. A boot lid for a convertible-type vehicle with folding roof (2), comprising means allowing this boot lid (1) to be opened on the one hand so that the folded roof (2) can move into the boot (3) for stowing and on the other hand for accessing this boot (3) for stowing luggage, **characterized in that** the boot lid (1) is fixed to the chassis by means (5, 8, 9, 10, 13) which simultaneously allow pivoting of the boot lid (1) from the rear towards the front and sliding of this boot lid (1) from the front towards the rear.

2. A boot lid according to Claim 1, **characterized in that** the front part (1a) of the boot lid (1) is mounted in an articulated manner and in such a way as to slide along two guide rails (4) extending on each side of the boot (3), at least one (1b) of the side edges of the boot lid (1) being linked in an articulated manner to one of the ends of a brace (5) whose other end is linked in an articulated manner to a part of the chassis adjacent to the floor (6) of the boot.

3. A boot lid according to Claim 2, **characterized in that** the boot lid (1) can be moved between a closed position, in which the articulation (7) of this boot lid is located at the front of the guide rails (4) and the brace (5) is inclined so as to extend upwards and forwards, and an open position in which the articulation (7) of the boot lid is located at the rear of the guide rails (4) and the brace (5) extends upwards holding the boot lid (1) in a position which is inclined upwards and rearwards.

4. A boot lid according to one of Claims 2 or 3, **characterized in that** at each end of the front edge (la) of the boot lid (1) there is fixed a goose-necked part (8) which is bent forwards and downwards and bears at its end opposite the boot lid (1) a runner (9) which is engaged in the adjacent guide rail (4).

5. A boot lid according to one of Claims 2 to 4, **characterized in that** the opening of the boot lid (1) is controlled by an electric (10) or hydraulic jack.

6. A boot lid according to Claim 5, **characterized in that** the jack (10) is fixed in an articulated manner between the brace (5) and a part of the chassis adjacent to the floor (9) of the boot.

7. A boot lid according to one of Claims 1 to 6, **characterized in that** it is kept closed by a bolt (13) located at the rear of the boot lid.
